(19) Europäisches Patentamt
European Patent Office
Office européen des brevets

(11) **EP 3 592 084 B1**

(12) **EUROPEAN PATENT SPECIFICATION**

(45) Date of publication and mention
of the grant of the patent:
**03.03.2021 Bulletin 2021/09**

(21) Application number: **17905156.0**

(22) Date of filing: **12.04.2017**

(51) Int Cl.:
*H04W 72/08* (2009.01)    *H04L 5/00* (2006.01)
*H04L 27/10* (2006.01)

(86) International application number:
**PCT/CN2017/080253**

(87) International publication number:
**WO 2018/187970 (18.10.2018 Gazette 2018/42)**

(54) **SIGNAL TRANSMISSION METHOD AND APPARATUS**

SIGNALÜBERTRAGUNGSVERFAHREN UND -VORRICHTUNG

PROCÉDÉ ET APPAREIL DE TRANSMISSION DE SIGNAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.01.2020 Bulletin 2020/02**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventor: **TANG, Hai
Dongguan
Guangdong 523860 (CN)**

(74) Representative: **Manitz Finsterwald
Patent- und Rechtsanwaltspartnerschaft mbB
Martin-Greif-Strasse 1
80336 München (DE)**

(56) References cited:
CN-A- 102 577 156    CN-A- 102 647 790
US-A1- 2011 149 868    US-A1- 2016 127 098

• OPPO: "Subcarrier spacing design for data and
reference signal", 3GPP DRAFT;
R1-1608900_SUBCARRIER SPACING DESIGN
FOR DATA AND REFERENCE SIGNAL_FINAL,
3RD GENERATION PARTNERSHIP PROJECT
(3GPP), MOBILE COMPETENCE CENTRE ; 650,
ROUTE DES LUCIOLES ; F-06921 SOPHIA-ANT ,
vol. RAN WG1, no. Lisbon, Portugal; 20161010 -
20161014 30 September 2016 (2016-09-30),
XP051158352, Retrieved from the Internet:
URL:http://www.3gpp.org/ftp/tsg_ran/WG1_RL
1/TSGR1_86b/Docs/ [retrieved on 2016-09-30]
• INTEL CORPORATION: "Considerations on NR
RRM with the flexible numerologies", 3GPP
DRAFT; R4-1609074 NR RRM NUMEROLOGY,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. RAN
WG4, no. Reno, Nevada, USA; 20161114 -
20161118 7 November 2016 (2016-11-07),
XP051195189, Retrieved from the Internet:
URL:http://www.3gpp.org/ftp/tsg_ran/WG4_Ra
dio/TSGR4_81/Docs/ [retrieved on 2016-11-07]

## Description

## TECHNICAL FIELD

The present invention relates to the field of wireless communication technology, and in particular, to a signal transmission method and an apparatus.

## BACKGROUND

In the 5G NR (new radio) system, in order to support multiple beams in uplink and downlink transmission, multiple beams are usually adopted to transmit a CSI-RS (channel state information-reference signal) or an SRS (sounding reference signal) respectively for performing channel measurement. Where the CSI-RS is used for estimation of the downlink channel and the SRS is used for estimation of the uplink channel.

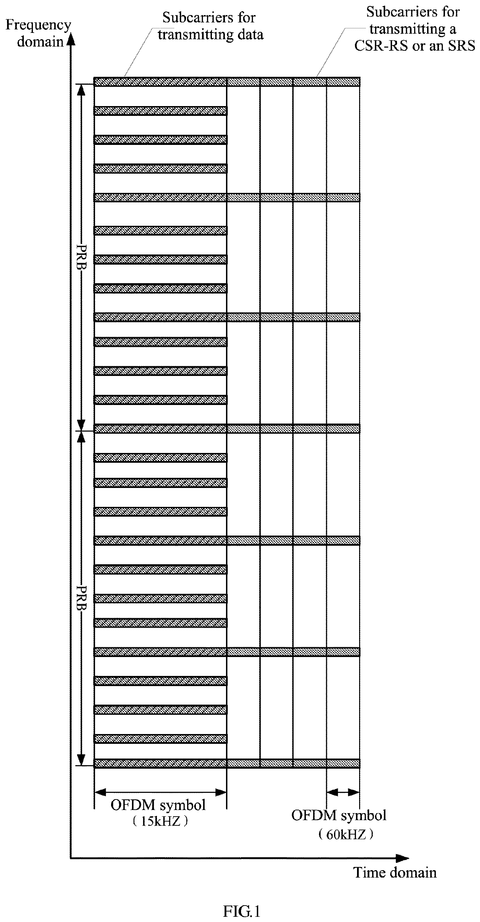

In order to transmit the CSI-RS or SRS by sufficient time domain resources, the CSI-RS or SRS can adopt a larger subcarrier interval than data transmission, thereby obtaining a shorter OFDM (orthogonal frequency division multiplexing) symbol length. Each OFDM symbol transmits the CSI-RS or SRS by adopting one beam. As shown in FIG. 1, the subcarrier interval between subcarriers for transmitting data can adopt 15 kHz, and the subcarrier interval between subcarriers for transmitting the CSR-RS or SRS adopts a subcarrier interval of 60 kHz. Thus, the OFDM symbol length of the CSR-RS or SRS is one quarter of the OFDM symbol length of the data, and four CSR-RSs or SRSs can be transmitted by four beams within the OFDM symbol length of one data, respectively.

According to subcarrier arrangement of the existing LTE (long term evolution), the subcarrier positions on different OFDM symbols are the same. If a cell transmits the CSR-RS or SRS by a larger subcarrier interval (for example, 60 kHz), and a neighboring cell transmits the data by a smaller subcarrier interval (for example, 15 kHz) in the same time domain, the interference of the CSR-RS or SRS on the data is concentrated on specific subcarriers. For example, if starting positions of the carriers are the same, the first, fifth, ninth, ... subcarriers are interfered. On the one hand, the interference concentrated on the particular subcarriers has a strong power, which will have a greater impact on the data demodulation of these subcarriers. On the other hand, the interference strengths on different subcarriers vary greatly, and if the neighboring cell performs interference measurement, the measurement results on different subcarriers will be very different, and the accuracy is poor. In particular, if the interference measurement is not performed on the above particular subcarriers, an erroneous result of the interference measurement is obtained.

The document of "Subcarrier spacing design for data and reference signal" (R1-1608900, 3GPP TSG RAN WG1 #86bis, Lisbon, Portugal, 10th-14th October 2016) describes the potential problems of using the same subcarrier spacing for data and RS symbols in a slot for NR, and proposes to decouple the numerology setting of data and RS.

US 2011/149868 A1 describes an apparatus and method for communicating and processing reference signals in a downlink subframe based on an identifier associated with a base station transmitting the subframe.

The document of "Consideration on NR RRM with the flexible numerologies" (R4-1609074, 3GPP TSG-RAN WG4 #81, Reno, Nevada, USA, 14-18 November, 2016) describes the RRM impacts from the multiple numerologies in NR.

## SUMMARY

The present invention is set out in the independent claims whereas preferred embodiments and further implementations are outlined in the dependent claims, description and figures.

## BRIEF DESCRIPTION OF DRAWINGS

FIG. 1 is a resource schematic diagram for transmitting a CSI-RS or an SRS in the prior art;
FIG 2 is a flow chart of a method performed at a terminal device side provided by an embodiment of the present invention;
FIG. 3 is a resource schematic diagram for transmitting a first signal provided by an embodiment of the present invention;
FIG. 4 is a flow chart of a method performed by a network side device provided by an embodiment of the present invention;
FIG. 5a is a schematic structural diagram of an apparatus disposed in a terminal device provided by an embodiment of the present invention; and
FIG. 5b is a schematic structural diagram of an apparatus disposed in a device at a network side provided by an embodiment of the present invention.

## DESCRIPTION OF EMBODIMENTS

The invention is defined by the appended claims. In order to make the purpose, technical solutions and advantages of the present invention clearer, the present invention will be described in detail below with reference to drawings and specific embodiments.

The terms used in the embodiments of the present invention are only for the purpose of describing particular embodiments and are not intended to limit the present invention.

Depending on the context, the word "if' used herein can be interpreted as "at the time of' or "when" or "in response to determining" or "in response to detecting". Similarly, depending on the context, the phrase "if determining" or "if detecting (conditions or events stated)" can be interpreted as "when determining" or "in response to determining" or "when detecting (conditions or events stated)" or "in response to detecting (conditions or events stated)". "A plurality of' related in the embodiments of the present invention refers to more than one.

The core idea of the present invention is that a frequency offset of subcarriers exists between a plurality of OFDM symbols when the first signal is transmitted on the subcarriers of the plurality of OFDM symbols. That is to say, positions of the subcarriers on different OFDM symbols transmitting the first signal are no longer the same, but there is an offset in frequency.

Where the above transmission can include sending and receiving. In an embodiment of the present invention, the process includes: transmitting, by a terminal device side, a first signal on subcarriers of a plurality of OFDM symbols, or receiving, by the terminal device side, a first signal on subcarriers of a plurality of OFDM symbols, or transmitting, by a network side device, a first signal on subcarriers of a plurality of OFDM symbols, or receiving, by the network side device, a first signal on subcarriers of a plurality of OFDM symbols. The terminal device involved in the embodiment of the present invention can include, but is not limited to, a mobile phone, a tablet computer, a notebook computer, a PDA, a multimedia device, or even an internet car, a smart wearable device, or the like having a wireless communication function. The network side device involved in the embodiment of the present invention can include, but is not limited to, a base station device such as a BST, a NodeB, or an eNodeB. The method provided by the present invention will be described in detail below with reference to the embodiments.

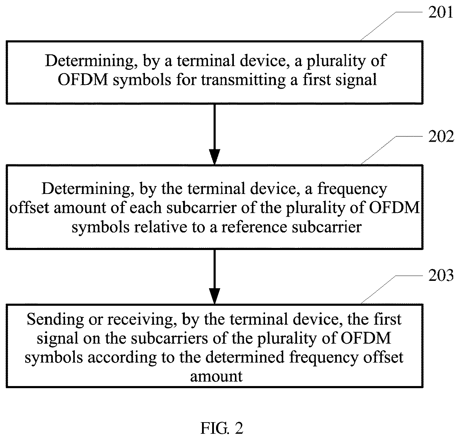

FIG. 2 is a flow chart of a method performed at a terminal device side provided by an embodiment of the present invention. As shown in FIG. 2, the method can include the following steps:

in 201, determining, by a terminal device, a plurality of OFDM symbols for transmitting a first signal.

In the embodiment of the present invention, the first signal can include a reference signal such as a CSI-RS, an SRS, and a demodulation reference signal (DMRS), can also include a control signal, and can further include data.

The plurality of OFDM symbols (hereinafter referred to as "a plurality of OFDM symbols") for transmitting the first signal may be a plurality of OFDM symbols that are continuous in the time domain. If the first signal includes a reference signal, such as a CSI-RS, an SRS, or a DMRS, or includes a control signal, a total duration of the plurality of OFDM symbols is usually: a duration of one OFDM symbol for transmitting data in a slot or a subframe where the plurality of OFDM symbols are located, or a duration of one OFDM symbol obtained according to a subcarrier interval determining a length of the subframe where the plurality of OFDM symbols are located. The length of the OFDM symbol used for transmitting the reference signal, the control signal and the like in the subframe can be determined according to the length of the subframe, that is, there is a correspondence relationship between the length of the OFDM symbol and the length of the subframe. And with the correspondence relationship, once the length of the subframe is determined, correspondingly, the total length of the OFDM symbol used for transmitting the first signal in the embodiment of the present invention can also be determined.

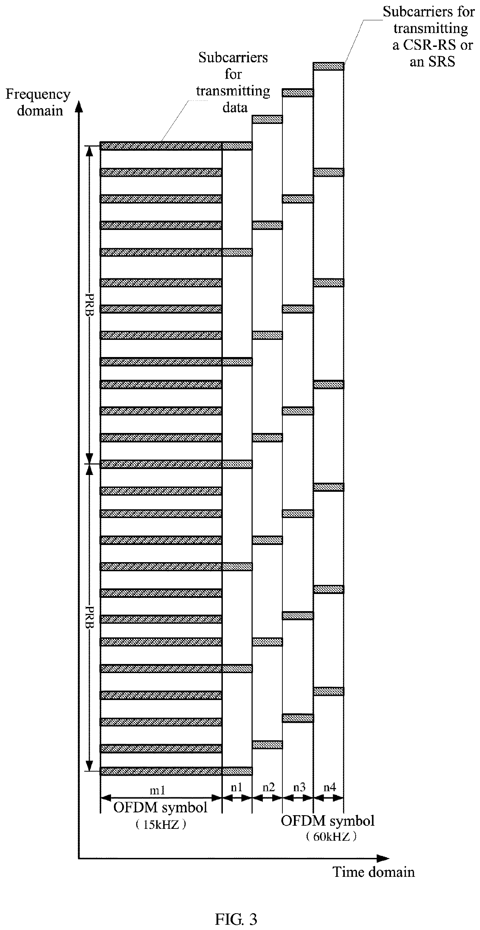

For example, as shown in FIG. 3, four continuous OFDM symbols identified as n1, n2, n3, and n4 can be used for transmitting the first signal, and the total duration of the four OFDM symbols is the same as the duration of the OFDM symbol identified as ml, where the OFDM symbol identified as m1 is used for transmitting data.

If the first signal includes data, the total duration of the plurality of OFDM symbols can be: a duration of one OFDM symbol obtained according to the subcarrier interval determining the length of the subframe where the plurality of OFDM symbols are located.

The subcarrier interval (hereinafter referred to as "first subcarrier interval") used for transmitting the first signal on the subcarriers of the plurality of OFDM symbols is different from a second subcarrier interval, where the second subcarrier interval is a subcarrier interval used for transmitting data (if the first signal is a non-data type signal, the "transmitting data" here is the data transmitted by the terminal device; if the first signal is a data type signal, the "transmitting data" here is the data transmitted by the other terminal device, such as a neighboring cell terminal device) in the slot or the subframe where the plurality of OFDM symbols are located, or a subcarrier interval for determining the length of the subframe where the plurality of OFDM symbols are located. Usually, the first subcarrier interval is greater than the second subcarrier interval, preferably the first subcarrier interval is $2^n$ times the second subcarrier interval, where n is a positive integer. For example, as shown in FIG. 3, the subcarrier interval used in the four OFDM symbols identified as n1, n2, n3, and n4 is 60 kHz, and the subcarrier interval used in the OFDM symbol identified as m1 is 15 kHz, that is, the first subcarrier interval is 4 times the second subcarrier interval.

In addition, the plurality of OFDM symbols used for transmitting the first signal can be determined in a pre-agreed way, that is, the terminal device and the network side device pre-arrange indices of the plurality of OFDM symbols used for transmitting the first signal, and both of them determine positions of the plurality of OFDM symbols according to the pre-agreed way.

In addition to using the pre-agreed way, the information of the plurality of OFDM symbols for transmitting the first signal can also be sent by the network side device by means of a high layer signaling and/or a physical layer signaling. Specifically, the method may include, but is not limited to, the followings:

the first way: the high layer signaling includes indices or number of a plurality of OFDM symbols used for transmitting the first signal. That is, the terminal device receives the high layer signaling sent by the network side device, and obtains the indices or number of the plurality of OFDM symbols used for transmitting the first signal from the high layer signaling.

The second way: the physical layer signaling includes indices or number of the OFDM symbols used for transmitting the first signal. That is, the terminal device receives the physical layer signaling sent by the network side device, and obtains indices or number of the plurality of OFDM symbols used for transmitting the first signal from the physical layer signaling.

Where if the high layer signaling or the physical layer signaling includes the number information, the information of the OFDM symbols used for transmitting the first signal may be indicated by the way of combining multiple signalings. As an example, the high layer signaling includes an index of an initial OFDM symbol for transmitting the first signal, and the physical layer signaling includes the number of OFDM symbols used for transmitting the first signal. That is, the terminal device obtains the index of the initial OFDM symbol used for transmitting the first signal from the high layer signaling, obtains the number of OFDM symbols used for transmitting the first signal from the physical layer signaling, and further determines the indices of the plurality of OFDM symbols used for transmitting the first signal.

In 202, determining, by the terminal device, a frequency offset amount of each subcarrier of the plurality of OFDM symbols relative to a reference subcarrier.

Where the reference subcarrier may be, but not limited to, any one of the followings:

1) a subcarrier of the first OFDM symbol of the plurality of OFDM symbols, such as shown in FIG. 3, which may be a subcarrier of an OFDM symbol identified as n1.
2) a center carrier on system bandwidth.
3) a DC carrier. The DC carrier is an unused subcarrier at a center position of the LTE downlink carrier, and is a subcarrier set to avoid high interference due to possible leakage of the local crystal oscillator.
4) a first subcarrier of a physical resource block (PRB) where the plurality of OFDM symbols are located.
5) a subcarrier closest to a center frequency point of the system.
6) a center carrier on bandwidth allocated to the terminal device.
7) a center carrier on bandwidth for transmitting a sync signal.

In the embodiment of the present invention, each subcarrier for transmitting the plurality of OFDM symbols has a different frequency offset amount relative to the reference subcarrier, so that the transmission of the first signal is relatively evenly distributed in the frequency domain, instead of being concentrated on subcarriers at a specific frequency as in the prior art.

The above frequency offset is in units of a first subcarrier interval or a second subcarrier interval. As the indices of the OFDM symbols increase in the plurality of OFDM symbols, the frequency offset amount corresponding to the OFDM symbol also increases. For example, as shown in FIG. 3, assuming that the reference subcarrier is the first subcarrier of the OFDM symbol identified as m1, the offset amounts of the OFDM symbols identified as n1, n2, n3, and n4 are 0, a quarter of the first subcarrier interval, two quarters of the first subcarrier interval, and three quarters of the first subcarrier interval relative to the reference subcarrier, respectively.

In addition, when determining a frequency offset amount of each subcarrier of the plurality of OFDM symbols relative to the reference subcarrier, the frequency offset amount of each subcarrier of the plurality of OFDM symbols relative to the reference subcarrier can be determined according to the number of the plurality of OFDM symbols. For example, assuming that the number of the plurality of OFDM symbols used for transmitting the first signal is M, the frequency offset amount corresponding to the mth OFDM symbol can be Q $\underline{(m-1)}$ first subcarrier intervals, where $Q = \dfrac{(m-1)}{M}$.

As an implementation, the above frequency offset amount can be p first subcarrier intervals, or K+p first subcarrier intervals, or K second subcarrier intervals, where $0 \leq p < 1$ and K is a natural number. For example, as shown in FIG. 3, the offset amounts of the OFDM symbols identified as n1, n2, n3, and n4 relative to the reference subcarrier are 0, a quarter of the first subcarrier interval, two quarters of the first subcarrier interval, and three quarters of the first subcarrier interval, respectively. They can also be seen as: 0, 1 second subcarrier interval, 2 second subcarrier intervals, and 3 second subcarrier intervals, respectively.

In the embodiment of the present invention, the frequency offset amount of each subcarrier of the plurality of OFDM symbols relative to the reference subcarrier can be configured in advance at the terminal device side, and the terminal device determines, according to the configuration, the frequency offset amount of each subcarrier of the above plurality of OFDM symbols relative to the reference subcarrier.

As a preferred implementation, the terminal device can receive the subcarrier offset indication information sent by the network side device, and obtain the frequency offset amount of each subcarrier of the plurality of OFDM symbols relative to the reference subcarrier from the subcarrier offset indication information.

Where when receiving the subcarrier offset indication information sent by the network side device, the terminal device can use, but not be limited to, one of the following ways:

the first way: receiving the high layer signaling sent by the network side device, where the high layer signaling includes the subcarrier offset indication information.

The second way: receiving the high layer signaling and downlink control information (DCI) signaling sent by the network side device, where the information included in the high layer signaling and the information included in the DCI signaling are combined to constitute the subcarrier offset indication information.

In this way, the high layer signaling may include a plurality of candidate subcarrier offset indication information, and the DCI signaling includes indicating which subcarrier offset indication information in the above plurality of candidate subcarrier offset indication information is used.

When the frequency offset amount of each subcarrier of the plurality of OFDM symbols relative to the reference subcarrier is obtained from the subcarrier offset indication information, one of the following ways may be used, but is not limited to:

The first way: obtaining, from the subcarrier offset indication information, a frequency offset amount of each subcarrier of one OFDM symbol of the plurality of OFDM symbols relative to the reference subcarrier; and then determining, according to a pre-agreed subcarrier relative frequency offset amount among the OFDM symbols, a frequency offset amount of each subcarrier of the other OFDM symbols in the plurality of OFDM symbols relative to the reference subcarrier. That is to say, the frequency offset amount corresponding to one of the OFDM symbols is sent by the network side device, and the subcarrier relative frequency offset amount among the OFDM symbols uses a pre-agreed value.

For example, as shown in FIG. 3, it is assumed that the offset amount of the subcarrier of the OFDM symbol identified as n1 relative to the reference subcarrier obtained according to the subcarrier offset indication information sent by the network side device is 0; and the relative offset amount among respective OFDM symbols uses an agreed value, and if the agreed value is a quarter of the first subcarrier interval, it can be determined that the offset amounts of the OFDM symbols identified as n2, n3, and n4 are a quarter of the first subcarrier interval, two quarters of the first subcarrier interval, and three quarters of the first subcarrier interval relative to the reference subcarrier, respectively. Of course, the frequency offset amount of each subcarrier of other OFDM symbols (for example, OFDM symbols identified as n2, n3, or n4) relative to the reference subcarrier can also be specified in high layer signaling. In this example, only the frequency offset amount corresponding to the OFDM symbol identified as n1 specified in high layer signaling is taken as an example.

The second way: obtaining, from the subcarrier offset indication information, a subcarrier relative frequency offset amount among the OFDM symbols; and determining, according to a pre-agreed frequency offset amount of each subcarrier of one OFDM symbol of the plurality of OFDM symbols relative to the reference subcarrier, a frequency offset amount of each subcarrier of the other OFDM symbols in the plurality of OFDM symbols relative to the reference subcarrier. That is to say, the frequency offset amount corresponding to one of the OFDM symbols uses a pre-agreed value, and the subcarrier relative frequency offset amount among the OFDM symbols is sent by the network side device.

For example, as shown in FIG. 3, the relative offset amount among respective OFDM symbols is obtained according to the subcarrier offset indication information sent by the network side device, and it is assumed that the relative offset amount is a quarter of the first subcarrier interval, the offset amount of the subcarrier of the OFDM symbol identified as n1 relative to the reference subcarrier uses the pre-agreed value which is assumed to be 0, then it can be determined that the offset amounts of the OFDM symbols identified as n2, n3, and n4 relative to the reference subcarrier are a quarter of the first subcarrier interval, two quarters of the first subcarrier interval, and three quarters of the first subcarrier interval, respectively.

The third way: obtaining, from the subcarrier offset indication information, a frequency offset amount of each subcarrier of one OFDM symbol of the plurality of OFDM symbols relative to the reference subcarrier, and a subcarrier relative frequency offset amount among the OFDM symbols, so as to determine the frequency offset amount of each subcarrier of the plurality of OFDM symbols relative to the reference subcarrier. That is to say, the frequency offset amount corresponding to one of the OFDM symbols and the subcarrier relative frequency offset amount among the OFDM symbols are sent by the network side device.

For example, as shown in FIG. 3, from the subcarrier offset indication information sent by the network side device, the relative offset amount among respective OFDM symbols is obtained, and it is assumed to be a quarter of a first subcarrier interval, and the offset amount of the subcarrier of the OFDM symbol identified as n1 relative to the reference subcarrier is also obtained, and it is assumed to be 0, then it can be determined that the offset amounts of the OFDM symbols identified as n2, n3, and n4 relative to the reference subcarrier are a quarter of the first subcarrier interval, two quarters of the first subcarrier interval, and three quarters of the first subcarrier interval, respectively.

In 203, sending or receiving, by the terminal device, the first signal on the subcarriers of the plurality of OFDM symbols according to the determined frequency offset amount.

In the frequency domain, the terminal device can determine the frequency positions of the subcarriers of each OFDM symbol in the plurality of OFDM symbols according to the determined frequency offset amount and the frequency position of the reference subcarrier; and the terminal device sends or receives the first signal on the frequency positions of these subcarriers.

In the time domain, the terminal device can determine a phase or a delay of the time domain signal transmitting the first signal on the plurality of OFDM symbols according to the determined frequency offset amount; and then send or receive, according to the phase or the delay of the time domain signal, the first signal on the plurality of OFDM symbols.

Where, for the first signal, for example, the reference information such as an SRS, a DMRS, the uplink control information, or the uplink data, the terminal device sends the first signal on the above plurality of OFDM symbols. For the first signal, for example, the reference signal such as a CSI-RS, the downlink control information, or the downlink data, the terminal device receives the first signal on the above plurality of OFDM symbols.

In this step, since the frequency offset of the subcarrier exists among the determined plurality of OFDM symbols, that is, the frequency points where subcarriers corresponding to the same subcarrier index on the plurality of OFDM symbols are located are different, thus, as shown in FIG. 3, when the first signal is transmitted on the subcarriers of the plurality of OFDM symbols, the first signal is no longer concentrated on a specific subcarrier, but is dispersed more evenly. This way enables the interference of the transmission of the first signal is more even for the data being transmitted by the neighboring cell terminal device. On one hand, the influence on the data demodulation of the neighboring cell terminal device is reduced; and on the other hand, if the neighboring cell performs interference measurement, the difference in measurement results on different subcarriers is reduced and the accuracy of the interference measurement result is improved.

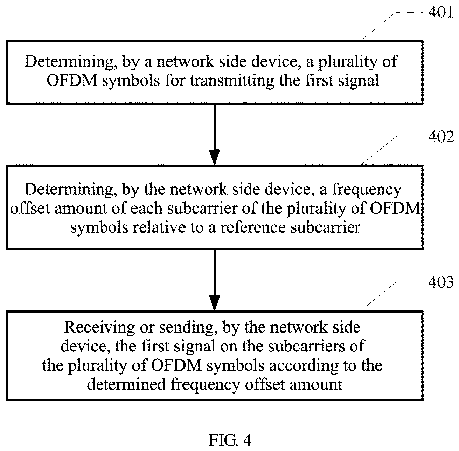

FIG. 4 is a flow chart of a method performed by a network side device provided by an embodiment of the present invention. As shown in FIG. 4, the method can include the following steps:

in 401, determining, by a network side device, a plurality of OFDM symbols for transmitting the first signal.

The related description of the plurality of OFDM symbols may be referred to the related description in step 201 of the embodiment shown in FIG. 2, and details are not described herein again.

In addition, the plurality of OFDM symbols used for transmitting the first signal can be determined in a pre-agreed way, that is, the terminal device and the network side device pre-agree indices of the plurality of OFDM symbols used for transmitting the first signal, and both of them determine the positions of plurality of OFDM symbols according to the pre-agreed way.

In addition to using the pre-agreed way, the information of transmitting the plurality of OFDM symbols for transmitting the first signal can also be sent by the network side device by means of a high layer signaling and/or a physical layer signaling, Specifically, it can include, but is not limited to, the following ways:

the first way: the high layer signaling includes indices or number of a plurality of OFDM symbols for transmitting the first signal.

The second way: the physical layer signaling includes indices or number of the OFDM symbols used for transmitting the first signal.

Where if the high layer signaling or the physical layer signaling includes the number information, the information of the OFDM symbols used for transmitting the first signal may be indicated by the way of combining multiple signalings. As an example, the high layer signaling includes an index of an initial OFDM symbol for transmitting the first signal, and the physical layer signaling includes the number of OFDM symbols used for transmitting the first signal.

In 402, determining, by the network side device, a frequency offset amount of each subcarrier of the plurality of OFDM symbols relative to a reference subcarrier.

The description of the reference subcarrier and the frequency offset amount may be referred to the related description in step 202 in the embodiment shown in FIG. 2, and details are not described herein again.

In the embodiment of the present invention, the frequency offset amount of each subcarrier of the plurality of OFDM symbols relative to the reference subcarrier may be configured in advance on the network side device, and the network side device determines, according to the configuration, the frequency offset amount of each subcarrier of the plurality of OFDM symbols relative to the frequency offset of the reference subcarrier.

As a preferred implementation, after determining a frequency offset amount of each subcarrier for transmitting the first signal on the plurality of OFDM symbols relative to the reference subcarrier, the network side device can send the subcarrier offset indication information to the terminal device. Where the subcarrier offset indication information includes the frequency offset amount of each subcarrier of the plurality of OFDM symbols relative to the reference subcarrier.

When sending the subcarrier offset indication information to the terminal device, the network side device can use, but not be limited to, one of the following methods:

the first way: sending the high layer signaling to the terminal device, where the high layer signaling includes the subcarrier offset indication information.

The second way: sending the high layer signaling and the DCI signaling to the terminal device, where the information included in the high layer signaling and the information included in DCI signaling are combined to constitute the subcarrier offset indication information.

In this way, the high layer signaling may include a plurality of candidate subcarrier offset indication information, and the DCI signaling includes indicating which subcarrier offset indication information in the above plurality of candidate subcarrier offset indication information is used.

The way in which the network side device sends the subcarrier offset indication information may be, but not limited to, one of the following ways:

the first way: the subcarrier offset indication information includes a frequency offset amount of each subcarrier of one OFDM symbol of the plurality of OFDM symbols relative to the reference subcarrier; and the subcarrier relative frequency offset amount among the OFDM symbols is pre-agreed by the network side device and the terminal device. That is to say, the frequency offset amount corresponding to one of the OFDM symbols is sent by the network side device to the terminal device, and the subcarrier relative frequency offset amount among the OFDM symbols uses a pre-agreed value.

The second way: the subcarrier offset indication information includes a subcarrier relative frequency offset amount among OFDM symbols; and a frequency offset amount of each subcarrier of one OFDM symbol of the plurality of OFDM symbols relative to the reference subcarrier is pre-agreed by the network side device and the terminal device. That is to say, the frequency offset amount corresponding to one of the OFDM symbols uses a pre-agreed value, and the subcarrier relative frequency offset amount among the OFDM symbols is sent by the network side device to the terminal device.

The third way: the subcarrier offset indication information includes a frequency offset amount of each subcarrier of one OFDM symbol of the plurality of OFDM symbols relative to the reference subcarrier, and the subcarrier relative frequency offset amount among the OFDM symbols. That is to say, the frequency offset amount corresponding to one of the OFDM symbols and the subcarrier relative frequency offset amount among the OFDM symbols are sent by the network side device to the terminal device.

In 403, receiving or sending, by the network side device, the first signal on the subcarriers of the plurality of OFDM symbols according to the determined frequency offset amount.

In the frequency domain, the network side device can determine the frequency positions of the subcarriers of each OFDM symbol of the plurality of OFDM symbols according to the determined frequency offset amount and the frequency position of the reference subcarrier; and the network side device receives or sends the first signal on the frequency positions of these subcarriers.

In the time domain, the network side device can determine a phase or a delay of the time domain signal transmitting the first signal on the plurality of OFDM symbols according to the determined frequency offset amount; and then send or receive the first signal on the plurality of OFDM symbols according to the phase or the delay of the time domain signal.

For the first signal, for example, the reference information such as an SRS, a DMRS, the uplink control information, or the uplink data, the network side device receives the first signal on the subcarriers of the above plurality of OFDM symbols. For the first signal, for example, the reference signal such as a CSI-RS, the downlink control information, or the downlink data, the network side device sends the first signal on the subcarriers of the above plurality of OFDM symbols.

The above is the description of the method provided by the present invention, and the apparatus provided by the present invention will be described in detail below with reference to embodiments.

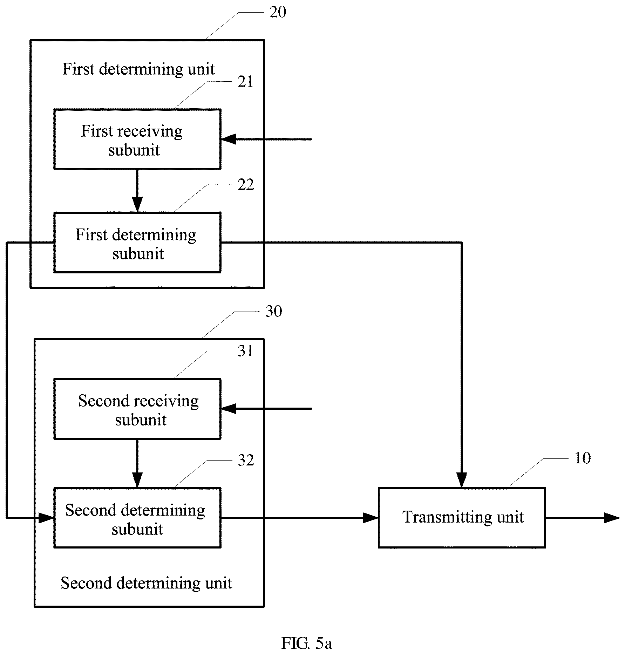

FIG. 5a is a schematic structural diagram of an apparatus provided by an embodiment of the present invention. As shown in FIG. 5a, the apparatus can include: a transmitting unit 10, and can further include a first determining unit 20 and a second determining unit 30. Where the main functions of each component are as follows:

the transmitting unit 10 is responsible for transmitting a first signal on subcarriers of a plurality of orthogonal frequency division multiplexed (OFDM) symbols, where a frequency offset of the subcarriers exists among the plurality of OFDM symbols.

Where the first signal may include, but is not limited to, reference information such as a CSI-RS, an SRS, a DMRS, or control information, or data.

Where the apparatus can be disposed in a terminal device, for the first signal, for example, the reference information such as the SRS, the DMRS, the uplink control information, or the uplink data, then the transmitting unit 10 is specifically configured to send the first signal on the subcarriers of the plurality of the OFDM symbols. For the first signal, for example, the reference signal such as a CSI-RS, the downlink control information, or the downlink data, the transmitting unit 10 is specifically configured to receive the first signal on subcarriers of the plurality of OFDM symbols.

The apparatus can be further disposed in a network side device, for the first signal, for example, the reference information such as an SRS, a DMRS, the uplink control information, or the uplink data, the transmitting unit 10 is specifically configured to receive the first signal on the subcarriers of the plurality of the OFDM symbols. For the first signal, for example, the reference signal such as a CSI-RS, the downlink control information, or the downlink data, the transmitting unit 10 is specifically configured to send the first signal on subcarriers of the plurality of OFDM symbols.

Where the plurality of OFDM symbols used for transmitting the first signal can be continuous in the time domain. If the first signal includes: a CSI-RS, an SRS, a DMRS, or control information, the total duration of the plurality of OFDM symbols can be: a duration of one OFDM symbol for transmitting data in a slot or a subframe where the plurality of OFDM symbols are located, or a duration of one OFDM symbol obtained according to a subcarrier interval determining a length of the subframe where the plurality of OFDM symbols are located.

If the first signal includes the first data, the total duration of the plurality of OFDM symbols can be: a duration of one OFDM symbol obtained according to a subcarrier interval that determines a subframe length where the plurality of OFDM symbols are located.

The first subcarrier interval used for transmitting the first signal on the subcarriers of the plurality of OFDM symbols is different from the second subcarrier interval, where the second subcarrier interval is a subcarrier interval used for transmitting data (if the first signal is a non-data type signal, the "transmitting data" here is the data transmitted by the terminal device; if the first signal is a data type signal, the "transmitting data" here is the data transmitted by the other terminal device, such as a neighboring cell terminal device) in the slot or the subframe where the plurality of OFDM symbols are located, or a subcarrier interval for determining the length of the subframe where the plurality of OFDM symbols are located. The length of the OFDM symbol used for transmitting the reference signal, the control signal in the subframe can be determined according to the length of the subframe. That is, there is a correspondence relationship between the length of the OFDM symbol and the length of the subframe, and once the length of the subframe is determined, correspondingly, the total length of the OFDM symbol used for transmitting the first signal in the embodiment of the present invention can also be determined.

Usually the first subcarrier interval is greater than the second subcarrier interval. Preferably, the first subcarrier interval is $2^n$ times the second subcarrier interval, where n is a positive integer.

The first determining unit 20 is responsible for determining a plurality of OFDM symbols for transmitting the first signal.

Where if the apparatus is disposed in the terminal device, the first determining unit 20 can specifically include: a first receiving subunit 21 and a first determining subunit 22.

Where the first receiving subunit 21 is responsible for receiving high layer signaling and/or physical layer signaling sent by the network side device.

The first determining subunit 22 is responsible for determining a plurality of OFDM symbols for transmitting the first signal according to the high layer signaling and/or the physical layer signaling.

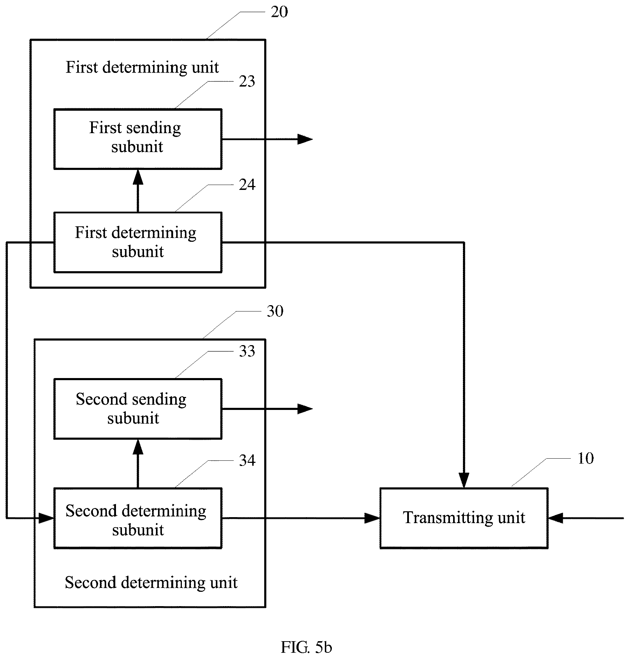

Where the first determining unit 20 may specifically include: a first sending subunit 23 and a first determining subunit 24, if the apparatus is disposed in the network side device, as shown in FIG. 5b.

The first determining subunit 24 is responsible for determining a plurality of OFDM symbols for transmitting the first signal. The first sending subunit 23 is responsible for transmitting the high layer signaling and/or physical layer signaling to the terminal device. Where the high layer signaling can include indices or number of the plurality of OFDM symbols used for transmitting the first signal. That is, the terminal device obtains the indices or number of the plurality of OFDM symbols from the high layer signaling sent by the network side device.

Alternatively, the physical layer signaling can include the indices or number of the plurality of OFDM symbols used for transmitting the first signal. That is, the terminal device obtains the indices or number of the plurality of OFDM symbols from the physical layer signaling sent by the network side device.

Where if the high layer signaling or the physical layer signaling includes the number information, the information of the OFDM symbols used for transmitting the first signal can be indicated by the way of combining a plurality of signalings. As an example: the high layer signaling includes an index of an initial OFDM symbol used for transmitting the first signal, and the physical layer signaling includes the number of OFDM symbols used for transmitting the first signal. That is, the terminal device obtains the index of the initial OFDM symbol from the high layer signaling sent by the network side device, obtains the number of the plurality of OFDM symbols from the physical layer signaling, and further determines the indices of the plurality of OFDM symbols used for transmitting the first signal.

The second determining unit 30 is responsible for determining the frequency offset amount of each subcarrier of the plurality of OFDM symbols relative to the reference subcarrier.

Where the second determining unit 30 can specifically include: a second receiving subunit 31 and a second determining subunit 32, if the apparatus is disposed in the terminal device, as shown in FIG. 5a.

Where the second receiving subunit 31 is responsible for receiving the subcarrier offset indication information sent by the network side device.

The second determining subunit 32 is responsible for determining the frequency offset amount of each subcarrier of the plurality of OFDM symbols relative to the reference subcarrier according to the subcarrier offset indication information.

Specifically, the second receiving subunit 31 can receive the high layer signaling sent by the network side device, where the high layer signaling includes the subcarrier offset indication information; or receive the high layer signaling and the downlink control information (DCI) signaling sent by the network side device, where the combination of the information included in the high layer signaling and the DCI signaling constitutes the subcarrier offset indication information.

If the apparatus is disposed on the network side device, the second determining unit 30 can include a second sending subunit 33 and a second determining subunit 34, as shown in FIG. 5b.

The second determining subunit 34 is responsible for determining the frequency offset amount of each subcarrier on the plurality of OFDM symbols used for transmitting the first signal relative to the reference subcarrier. The second sending subunit 33 is responsible for sending the subcarrier offset indication information to the terminal device, where the subcarrier offset indication information includes a frequency offset of each subcarrier of the plurality of OFDM symbols relative to the reference subcarrier. Specifically, the second sending subunit 33 may send high layer signaling to the terminal device, where the high layer signaling includes the subcarrier offset indication information; or send the high layer signaling and the downlink control information (DCI) signaling to the terminal device, where the combination of information included in the high layer signaling and the DCI signaling constitutes the subcarrier offset indication information.

The situation that the above combination of information included in the high layer signaling and the DCI signaling constitutes the subcarrier offset indication information can be: the high layer signaling includes multiple candidate subcarrier offset indication information, and the DCI signaling includes indicating which subcarrier offset indication information in the plurality of the candidate subcarrier offset indication information is used.

The above second determining subunit 32 can be specifically, but not limited to, perform the followings: the first way: obtaining, according to the subcarrier offset indication information, a frequency offset amount of each subcarrier of one OFDM symbol of the plurality of OFDM symbols relative to the reference subcarrier; and determining, according to the pre-agreed subcarrier relative frequency offset amount among the OFDM symbols, a frequency offset amount of each subcarrier of the other OFDM symbols in the plurality of OFDM symbols relative to the reference subcarrier.

The second way: obtaining, according to the subcarrier offset indication information, a subcarrier relative frequency offset amount among the OFDM symbols; and determining, according to the pre-agreed frequency offset amount of each subcarrier of one OFDM symbol of the plurality of OFDM symbols relative to the reference subcarrier, a frequency offset amount of each subcarrier of the other OFDM symbols in the plurality of OFDM symbols relative to the reference subcarrier.

The third way: obtaining, according to the subcarrier offset indication information, a frequency offset amount of each subcarrier of one OFDM symbol of the plurality of OFDM symbols relative to the reference subcarrier, and a subcarrier relative frequency offset amount among the OFDM symbols, so as to determine the frequency offset amount of each subcarrier of the plurality of OFDM symbols relative to the reference subcarrier.

The above reference subcarrier may include, but is not limited to, one of the followings:

1) a subcarrier of a first OFDM symbol of the plurality of OFDM symbols;
2) a first subcarrier of a physical resource block (PRB) where the plurality of OFDM symbols are located;
3) a center carrier on system bandwidth;
4) a DC carrier;
5) a subcarrier closest to a center frequency point;
6) a center carrier on bandwidth allocated to the terminal device; or

7) a center carrier on bandwidth for transmitting a sync signal.

Where the frequency offset is in units of the first subcarrier interval or the second subcarrier interval; the first subcarrier interval is a subcarrier interval used for transmitting the first signal on the subcarriers of the plurality of OFDM symbols; and the second subcarrier interval is a subcarrier interval used for transmitting data in a slot or a subframe where the plurality of OFDM symbols are located, or a subcarrier interval for determining a length of the subframe where the plurality of OFDM symbols are located.

As an implementation, in the above plurality of OFDM symbols, as the index of the OFDM symbol increases, the frequency offset amount corresponding to the OFDM symbol also increases.

In addition, the above second determining unit 30 may determine, according to the number of the plurality of OFDM symbols, a frequency offset amount of each subcarrier of the plurality of OFDM symbols relative to the reference subcarrier. For example, the frequency offset amount corresponding to the mth OFDM symbol

$$Q = \frac{(m-1)}{M},$$

of the plurality of OFDM symbols is Q first subcarrier intervals; where , and M is the total OFDM symbol number of the plurality of OFDM symbols.

In the embodiment of the present invention, the above frequency offset amount corresponding to the plurality of OFDM symbols may be: p first subcarrier intervals, or K+p first subcarrier intervals, or K second subcarrier intervals; where $0 \leq p < 1$ and K is a natural number.

In the frequency domain, the transmitting unit 10 determines, according to the determined frequency offset, the frequency positions of the subcarriers on each of the above plurality of OFDM symbols; and transmits the first signal on the determined frequency positions of the subcarriers on the plurality of OFDM symbols.

In the time domain, the transmitting unit 10 determines a phase or a delay of the time domain signal transmitting the first signal on the plurality of OFDM symbols according to the determined frequency offset; and transmits the first signal on the plurality of OFDM symbols according to the phase or the delay of the time domain signal.

The above method and apparatus provided by the embodiments of the present invention can be implemented by one or more integrated circuits, such as a codec chip, or can be accomplished by a program to instruct related hardware, where the program can be stored in a computer readable storage medium. Each unit in the above embodiment can be implemented in the form of hardware or in the form of a software function module. The present invention is not limited to any specific form of combination of hardware and software.

For example, it can be implemented by a device, where the device includes:

> one or more processors;
> memory; and
> one or more programs, where the one or more programs are stored in the memory, and are executed by the one or more processors to achieve the following operations:
> transmitting a first signal on subcarriers of the plurality of OFDM symbols, where a frequency offset of the subcarriers exists among the plurality of OFDM symbols.

In addition, with the development of time and technology, the meaning of the medium is more and more extensive, and the propagation route of the program is no longer limited by the tangible medium, and can also be downloaded directly from the network. Any combination of one or more computer readable media can be used. The computer readable medium can be a computer readable signal medium or a computer readable storage medium. The computer readable storage medium can be, for example, but not limited to, electronic, magnetic, optical, electromagnetic, infrared, or a semiconductor system, an apparatus, or a device, or any combination of the above. More specific examples (non-exhaustive lists) of computer readable storage media include: an electrical connection having one or more wires, a portable computer disk, a hard disk, a random access memory (RAM), a read only memory (ROM), an erasable programmable read only memory (EPROM or a flash memory), optical fiber, a portable compact disk read only memory (CD-ROM), an optical storage device, a magnetic storage device, or any suitable combination of the above. In this document, a computer readable storage medium can be any tangible medium that can include or store a program, which can be used by or can be used in connection with an instruction execution system, apparatus or a device.

A computer readable signal medium may include data signals that is propagated in the baseband or as part of a carrier, which carries a computer readable program code. Such propagated data signals can take a variety of forms including, but not limited to, electromagnetic signals, optical signals, or any suitable combination of the above. The computer readable signal medium can also be any computer readable medium other than a computer readable storage medium, which can send, propagate, or transmit a program that used by or can be used in connection with an instruction execution system, an apparatus, or a device.

In the several embodiments provided by the present invention, it should be understood that the disclosed system, apparatus, and method can be implemented in other ways. For example, the above apparatus embodiments are merely illustrative. For example, the division of the unit is only a logical function division, and can have another division way when being implemented in actual.

The units described as separate components can or cannot be physically separated, and the components displayed as units can or cannot be physical units, that is, may be located in one place, or may be distributed to multiple network units. Some or all of the units may be selected according to actual requirements to achieve the purpose of the solution of the embodiment.

In addition, each functional unit in each embodiment of the present invention can be integrated into one processing unit, or each unit may exist physically separately, or two or more units may be integrated into one unit. The above integrated unit can be implemented in the form of hardware or in the form of hardware plus software functional units.

The above are only the preferred embodiments of the present invention, and are not intended to limit the present invention. Any modifications, substitutions, improvements, etc., which are made within the principles of the present invention, should be included in the scope of protection of the present invention.

**Claims**

1. A signal transmission method, comprising:

> determining (202) a frequency offset amount of each subcarrier of a plurality of orthogonal frequency division multiplexing, OFDM, symbols relative to a reference subcarrier, wherein each subcarrier of the plurality of OFDM symbols has a different frequency offset amount relative to the reference subcarrier, and the frequency offset amount is: p first subcarrier intervals, or K+p first subcarrier intervals, wherein $0 \leq p < 1$ and K is a natural number, a first subcarrier interval is a subcarrier interval used for transmitting a first signal on subcarriers of the plurality of OFDM symbols; and
> transmitting (203) the first signal on the subcarriers of the plurality of OFDM symbols according to the determined frequency offset amount.

2. The method according to claim 1, wherein the transmitting (203) the first signal on the subcarriers of the plurality of OFDM symbols comprises:

> sending or receiving, by a terminal device, the first signal on the subcarriers of the plurality of OFDM symbols; or
> receiving or sending, by a network side device, the first signal on the subcarriers of the plurality of OFDM symbols.

3. The method according to claim 1, wherein the first signal comprises:

a channel state information reference signal, CSI-RS, a channel sounding reference signal, SRS, a demodulation reference signal, DMRS, control information, or first data.

4. The method according to claim 1, wherein the plurality of OFDM symbols are continuous in time domain.

5. The method according to claim 1, wherein the determining (202) a frequency offset amount of each subcarrier of a plurality of orthogonal frequency division multiplexing, OFDM, symbols relative to a reference subcarrier comprises:

   receiving subcarrier offset indication information sent by a network side device; and determining, according to the subcarrier offset indication information, the frequency offset amount of each subcarrier of the plurality of OFDM symbols relative to the reference sub carrier.

6. The method according to claim 1, wherein the reference subcarrier comprises: a subcarrier of a first OFDM symbol of the plurality of OFDM symbols; or a first subcarrier of a physical resource block, PRB, where the plurality of OFDM symbols are located; or a center carrier on system bandwidth; or, a DC carrier; or, a subcarrier closest to a center frequency point; or, a center carrier on bandwidth allocated to the terminal device; or, a center carrier on bandwidth for transmitting a sync signal.

7. The method according to claim 1, wherein the determining (202) a frequency offset amount of each subcarrier of a plurality of orthogonal frequency division multiplexing, OFDM, symbols relative to a reference subcarrier comprises: determining, according to the number of the plurality of OFDM symbols, the frequency offset amount of each subcarrier of the plurality of OFDM symbols relative to the reference subcarrier.

8. A signal transmission apparatus, comprising:

   a determining unit (30), configured to determine a frequency offset amount of each subcarrier of a plurality of orthogonal frequency division multiplexing, OFDM, symbols relative to a reference subcarrier, wherein each subcarrier of the plurality of OFDM symbols has a different frequency offset amount relative to the reference subcarrier, and the frequency offset amount is: p first subcarrier intervals, or K+p first subcarrier intervals, wherein $0 \leq p < 1$ and K is a natural number, a first subcarrier interval is a subcarrier interval used for transmitting a first signal on subcarriers of the plurality of OFDM symbols; and a transmitting unit (10), configured to transmit the first signal on the subcarriers of the plurality of OFDM symbols according to the determined frequency offset amount.

9. The apparatus according to claim 8, wherein the apparatus is disposed in a terminal device, wherein the transmitting unit (10) is configured to send or receive the first signal on the subcarriers of the plurality of OFDM symbols; or the apparatus is disposed in a network side device, and the transmitting unit (10) is configured to receive or send the first signal on the subcarriers of the plurality of OFDM symbols.

10. The apparatus according to claim 8, wherein the first signal comprises: a channel state information reference signal, CSI-RS, a channel sounding reference signal, SRS, a demodulation reference signal, DMRS, control information, or first data.

11. The apparatus according to claim 8, wherein the plurality of OFDM symbols are continuous in time domain.

12. The apparatus according to claim 8, wherein the determining unit (30) comprises:

   a receiving subunit (31), configured to receive subcarrier offset indication information sent by a network side device; and a determining subunit (32), configured to determine, according to the subcarrier offset indication information, the frequency offset amount of each subcarrier of the plurality of OFDM symbols relative to the reference subcarrier.

13. The apparatus according to claim 8, wherein the reference subcarrier comprises: a subcarrier of a first OFDM symbol of the plurality of OFDM symbols; or a first subcarrier of a physical resource block, PRB, where the plurality of OFDM symbols are located; or a center carrier on system bandwidth; or, a DC carrier; or, a subcarrier closest to a center frequency point; or, a center carrier on bandwidth allocated to the terminal device; or, a center carrier on bandwidth for transmitting a sync signal.

14. The apparatus according to claim 8, wherein the second determining unit (30) is configured to: determine, according to the number of the plurality of OFDM symbols, the frequency offset amount of each subcarrier of the plurality of OFDM symbols relative to the reference subcarrier.

## Patentansprüche

1. Signalübertragungsverfahren, umfassend:

   Bestimmen (202) eines Frequenzversatzwertes jedes Unterträgers einer Vielzahl von orthogonalen Frequenzmultiplex (Orthogonal Frequency Division Multiplexing, OFDM)-Symbolen relativ zu einem Referenzunterträger, wobei jeder Unterträger der Vielzahl von OFDM-Symbolen einen unterschiedlichen Frequenzversatzwert relativ zum Referenzunterträger aufweist und der Frequenzversatzwert lautet: p erste Unterträgerintervalle oder K+p erste Unterträgerintervalle, wobei $0 \leq p < 1$ ist, K eine natürliche Zahl ist und ein erstes Unterträgerintervall ein Unterträgerintervall ist, das zum Übertragen eines ersten Signals auf Unterträgern der Vielzahl von OFDM-Symbolen verwendet wird; und
   Übertragen (203) des ersten Signals auf den Unterträgern der Vielzahl von OFDM-Symbolen gemäß dem bestimmten Frequenzversatzwert.

2. Verfahren nach Anspruch 1, wobei das Übertragen (203) des ersten Signals auf den Unterträgern der Vielzahl von OFDM-Symbolen umfasst:

   Senden oder Empfangen, durch ein Endgerät, des ersten Signals auf den Unterträgern der Vielzahl von OFDM-Symbolen; oder
   Empfangen oder Senden, durch eine netzwerkseitige Vorrichtung, des ersten Signals auf den Unterträgern der Vielzahl von OFDM-Symbolen.

3. Verfahren nach Anspruch 1, wobei das erste Signal umfasst:
   ein Kanalzustandsinformationen-Referenzsignal (Channel State Information Reference Signal, CSI-RS), ein Sondierungsreferenzsignal (SRS) des Kanals, eine Demodulationsreferenzsignal (DMRS)-Steuerinformation oder erste Daten.

4. Verfahren nach Anspruch 1, wobei die Vielzahl von OFDM-Symbolen im Zeitbereich kontinuierlich sind.

5. Verfahren nach Anspruch 1, wobei das Bestimmen (202) eines Frequenzversatzwerts jedes Unterträgers einer Vielzahl von orthogonalen Frequenzmultiplex (OFDM)-Symbolen relativ zu einem Referenzunterträger umfasst:

   Empfangen einer Unterträger-Versatzanzeigeinformation, die von einer netzwerkseitigen Vorrichtung gesendet wird; und
Bestimmen, gemäß der Unterträger-Versatzanzeigeinformation, des Frequenzversatzwerts jedes Unterträgers der Vielzahl von OFDM-Symbolen relativ zu dem Referenzunterträger.

6. Verfahren nach Anspruch 1, wobei der Referenzunterträger umfasst: einen Unterträger eines ersten OFDM-Symbols der Vielzahl von OFDM-Symbolen; oder
   einen ersten Unterträger eines physischen Ressourcenblocks (PRB), in dem sich die Vielzahl von OFDM-Symbolen befindet; oder
   einen zentralen Träger auf der Systembandbreite; oder
   einen Gleichstromträger; oder
   einen Unterträger, der einem Mittenfrequenzpunkt am nächsten liegt; oder
   einen zentralen Träger auf der dem Endgerät zugewiesenen Bandbreite; oder
   einen zentralen Träger auf der Bandbreite zum Übertragen eines Synchronisationssignals.

7. Verfahren nach Anspruch 1, wobei das Bestimmen (202) eines Frequenzversatzwerts jedes Unterträgers einer Vielzahl von orthogonalen Frequenzmultiplex (OFDM)-Symbolen relativ zu einem Referenzunterträger umfasst:
   Bestimmen, gemäß der Anzahl der Vielzahl von OFDM-Symbolen, des Frequenzversatzwerts jedes Unterträgers der Vielzahl von OFDM-Symbolen relativ zum Referenzunterträger.

8. Signalübertragungsvorrichtung, umfassend:

   eine Bestimmungseinheit (30), die konfiguriert ist, um einen Frequenzversatzwert jedes Unterträgers einer Vielzahl von orthogonalen Frequenzmultiplex (OFDM)-Symbolen relativ zu einem Referenzunterträger zu bestimmen, wobei jeder Unterträger der Vielzahl von OFDM-Symbolen einen unterschiedlichen Frequenzversatzwert relativ zum Referenzunterträger aufweist und der Frequenzversatzwert lautet: p erste Unterträgerintervalle oder K+p erste Unterträgerintervalle, wobei $0 \leq p < 1$ ist, K eine natürliche Zahl ist und ein erstes Unterträgerintervall ein Unterträgerintervall ist, das zum Übertragen eines ersten Signals auf Unterträgern der Vielzahl von OFDM-Symbolen verwendet wird; und
   eine Übertragungseinheit (10), die konfiguriert ist, um das erste Signal auf den Unterträgern der Vielzahl von OFDM-Symbolen gemäß dem bestimmten Frequenzversatzwert zu übertragen.

**9.** Vorrichtung nach Anspruch 8, wobei die Vorrichtung in einem Endgerät angeordnet ist, wobei die Übertragungseinheit (10) konfiguriert ist, um das erste Signal auf den Unterträgern der Vielzahl von OFDM-Symbolen zu senden oder zu empfangen; oder die Vorrichtung in einer netzwerkseitigen Vorrichtung angeordnet ist und die Übertragungseinheit (10) konfiguriert ist, um das erste Signal auf den Unterträgern der Vielzahl von OFDM-Symbolen zu empfangen oder zu senden.

**10.** Vorrichtung nach Anspruch 8, wobei das erste Signal umfasst: ein Kanalzustandsinformationen-Referenzsignal (CSI-RS), ein Sondierungsreferenzsignal (SRS) des Kanals, eine Demodulationsreferenzsignal (DMRS)-Steuerinformation oder erste Daten.

**11.** Vorrichtung nach Anspruch 8, wobei die Vielzahl von OFDM-Symbolen im Zeitbereich kontinuierlich ist.

**12.** Vorrichtung nach Anspruch 8, wobei die Bestimmungseinheit (30) umfasst:

eine Empfangsuntereinheit (31), die konfiguriert ist, um eine von einer netzwerkseitigen Vorrichtung gesendete Unterträger-Versatzanzeigeinformation zu empfangen; und eine Bestimmungsuntereinheit (32), die konfiguriert ist, um gemäß der Unterträger-Versatzanzeigeinformation den Frequenzversatzwert jedes Unterträgers der Vielzahl von OFDM-Symbolen relativ zu dem Referenzunterträger zu bestimmen.

**13.** Vorrichtung nach Anspruch 8, wobei der Referenzunterträger umfasst: einen Unterträger eines ersten OFDM-Symbols der Vielzahl von OFDM-Symbolen; oder

einen ersten Unterträger eines physischen Ressourcenblocks (PRB), in dem sich die Vielzahl von OFDM-Symbolen befindet; oder einen zentralen Träger auf der Systembandbreite; oder einen Gleichstromträger; oder einen Unterträger, der einem Mittenfrequenzpunkt am nächsten liegt; oder einen zentralen Träger auf der dem Endgerät zugewiesenen Bandbreite; oder einen zentralen Träger auf der Bandbreite zum Übertragen eines Synchronisationssignals.

**14.** Vorrichtung nach Anspruch 8, wobei die zweite Bestimmungseinheit (30) konfiguriert ist, um: gemäß der Anzahl der Vielzahl von OFDM-Symbolen den Frequenzversatzwert jedes Unterträgers der Vielzahl von OFDM-Symbolen relativ zum Referenzunterträger zu bestimmen.

**Revendications**

**1.** Procédé de transmission de signal, comprenant :

la détermination (202) d'une amplitude de décalage de fréquence de chaque sous-porteuse d'une pluralité de symboles à multiplexage par répartition orthogonale de la fréquence, OFDM, par rapport à une sous-porteuse de référence, chaque sous-porteuse de la pluralité de symboles OFDM ayant une amplitude de décalage de fréquence différente par rapport à la sous-porteuse de référence, et l'amplitude de décalage de fréquence étant : p premiers intervalles de sous-porteuse, ou K+p premiers intervalles de sous-porteuse, où $0 \leq p < 1$ et K est un nombre naturel, un premier intervalle de sous-porteuse étant un intervalle de sous-porteuse utilisé pour la transmission d'un premier signal sur les sous-porteuses de la pluralité de symboles OFDM ; et la transmission (203) du premier signal sur les sous-porteuses de la pluralité de symboles OFDM conformément à l'amplitude de décalage de fréquence déterminée.

**2.** Procédé selon la revendication 1, la transmission (203) du premier signal sur les sous-porteuses de la pluralité de symboles OFDM comprenant :

l'émission ou la réception, par un dispositif terminal, du premier signal sur les sous-porteuses de la pluralité de symboles OFDM ; ou la réception ou l'émission, par un dispositif côté réseau, du premier signal sur les sous-porteuses de la pluralité de symboles OFDM.

**3.** Procédé selon la revendication 1, le premier signal comprenant : un signal de référence d'information d'état de canal, CSI-RS, un signal de référence de sondage de canal, SRS, un signal de référence de démodulation, DMRS, des informations de commande ou des premières données.

**4.** Procédé selon la revendication 1, la pluralité de symboles OFDM étant continus dans le domaine temporel.

**5.** Procédé selon la revendication 1, la détermination (202) d'une amplitude de décalage de fréquence de chaque sous-porteuse d'une pluralité de symboles à multiplexage par répartition orthogonale de la fréquence, OFDM, par rapport à une sous-porteuse de référence comprenant :

la réception d'informations d'indication de décalage de sous-porteuse envoyées par un dispositif côté réseau ; et

la détermination, conformément aux informations d'indication de décalage de sous-porteuse, de l'amplitude de décalage de fréquence de chaque sous-porteuse de la pluralité de symboles OFDM par rapport à la sous-porteuse de référence.

6. Procédé selon la revendication 1, la sous-porteuse de référence comprenant : une sous-porteuse d'un premier symbole OFDM de la pluralité de symboles OFDM ; ou
une première sous-porteuse d'un bloc de ressource physique, PRB, où sont situés la pluralité de symboles OFDM ; ou
une porteuse centrale sur une largeur de bande de système ; ou
une porteuse CC ; ou
une sous-porteuse la plus proche d'un point de fréquence central ; ou
une porteuse centrale sur une largeur de bande attribuée au dispositif terminal ; ou
une porteuse centrale sur une largeur de bande destinée à la transmission d'un signal de synchronisation.

7. Procédé selon la revendication 1, la détermination (202) d'une amplitude de décalage de fréquence de chaque sous-porteuse d'une pluralité de symboles à multiplexage par répartition orthogonale de la fréquence, OFDM, par rapport à une sous-porteuse de référence comprenant :
la détermination, en fonction du nombre de la pluralité de symboles OFDM, de l'amplitude de décalage de fréquence de chaque sous-porteuse de la pluralité de symboles OFDM par rapport à la sous-porteuse de référence.

8. Appareil de transmission de signal, comprenant :

une unité de détermination (30), configurée pour déterminer une amplitude de décalage de fréquence de chaque sous-porteuse d'une pluralité de symboles à multiplexage par répartition orthogonale de la fréquence, OFDM, par rapport à une sous-porteuse de référence, chaque sous-porteuse de la pluralité de symboles OFDM ayant une amplitude de décalage de fréquence différente par rapport à la sous-porteuse de référence, et l'amplitude de décalage de fréquence étant : p premiers intervalles de sous-porteuse, ou K+p premiers intervalles de sous-porteuse, où $0 \leq p < 1$ et K est un nombre naturel, un premier intervalle de sous-porteuse étant un intervalle de sous-porteuse utilisé pour la transmission d'un premier signal sur les sous-porteuses de la pluralité de symboles OFDM ; et
une unité de transmission (10), configurée pour transmettre le premier signal sur les sous-porteuses de la pluralité de symboles OFDM conformément à l'amplitude de décalage de fréquence déterminée.

9. Appareil selon la revendication 8, l'appareil étant disposé dans un dispositif terminal, l'unité de transmission (10) étant configurée pour émettre ou recevoir le premier signal sur les sous-porteuses de la pluralité de symboles OFDM ; ou
l'appareil étant disposé dans un dispositif côté réseau, et l'unité de transmission (10) étant configurée pour recevoir ou émettre le premier signal sur les sous-porteuses de la pluralité de symboles OFDM.

10. Appareil selon la revendication 8, le premier signal comprenant :
un signal de référence d'information d'état de canal, CSI-RS, un signal de référence de sondage de canal, SRS, un signal de référence de démodulation, DMRS, des informations de commande ou des premières données.

11. Appareil selon la revendication 8, la pluralité de symboles OFDM étant continus dans le domaine temporel.

12. Appareil selon la revendication 8, l'unité de détermination (30) comprenant :

une sous-unité de réception (31), configurée pour recevoir des informations d'indication de décalage de sous-porteuse envoyées par un dispositif côté réseau ; et
une sous-unité de détermination (32), configurée pour déterminer, conformément aux informations d'indication de décalage de sous-porteuse, l'amplitude de décalage de fréquence de chaque sous-porteuse de la pluralité de symboles OFDM par rapport à la sous-porteuse de référence.

13. Appareil selon la revendication 8, la sous-porteuse de référence comprenant : une sous-porteuse d'un premier symbole OFDM de la pluralité de symboles OFDM ; ou
une première sous-porteuse d'un bloc de ressource physique, PRB, où sont situés la pluralité de symboles OFDM ; ou
une porteuse centrale sur une largeur de bande de système ; ou
une porteuse CC ; ou
une sous-porteuse la plus proche d'un point de fréquence central ; ou
une porteuse centrale sur une largeur de bande attribuée au dispositif terminal ; ou
une porteuse centrale sur une largeur de bande destinée à la transmission d'un signal de synchronisation.

**14.** Appareil selon la revendication 8, la deuxième unité de détermination (30) étant configurée pour : déterminer, en fonction du nombre de la pluralité de symboles OFDM, l'amplitude de décalage de fréquence de chaque sous-porteuse de la pluralité de symboles OFDM par rapport à la sous-porteuse de référence.

# EP 3 592 084 B1

FIG.1

201

Determining, by a terminal device, a plurality of OFDM symbols for transmitting a first signal

202

Determining, by the terminal device, a frequency offset amount of each subcarrier of the plurality of OFDM symbols relative to a reference subcarrier

203

Sending or receiving, by the terminal device, the first signal on the subcarriers of the plurality of OFDM symbols according to the determined frequency offset amount

FIG. 2

FIG. 3

401

Determining, by a network side device, a plurality of
OFDM symbols for transmitting the first signal

402

Determining, by the network side device, a frequency
offset amount of each subcarrier of the plurality of OFDM
symbols relative to a reference subcarrier

403

Receiving or sending, by the network side
device, the first signal on the subcarriers of
the plurality of OFDM symbols according to the
determined frequency offset amount

FIG. 4

20

First determining unit

21

First receiving
subunit

22

First determining
subunit

30

31

Second receiving
subunit

32

Second determining
subunit

Second determining unit

10

Transmitting unit

FIG. 5a

FIG. 5b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011149868 A1

**Non-patent literature cited in the description**

- Subcarrier spacing design for data and reference signal. *R1-1608900, 3GPP TSG RAN WG1 #86bis,* 10 October 2016

- Consideration on NR RRM with the flexible numerologies. *R4-1609074, 3GPP TSG-RAN WG4 #81,* 14 November 2016